# EUROPEAN PATENT APPLICATION

(11) **EP 4 418 450 A1**
(43) Date of publication of application: **21.08.2024**
(21) Application number: 22896006.8
(22) Date of filing: 15.11.2022
(51) Int. Cl.: H01Q 1/24, H01Q 1/38, H01Q 1/10, H04M 1/02

(54) **ELECTRONIC DEVICE COMPRISING ANTENNA**

(30) Priority: 16.11.2021 KR 20210157596; 16.03.2022 KR 20220032892
(71) Applicant: Samsung Electronics Co., Ltd., Suwon-si, Gyeonggi-do 16677 (KR)
(72) Inventor: PARK, Sungkoo, Suwon-si, Gyeonggi-do 16677 (KR); KIM, Seunghwan, Suwon-si, Gyeonggi-do 16677 (KR); LEE, Kyungjae, Suwon-si, Gyeonggi-do 16677 (KR); HWANG, Soonho, Suwon-si, Gyeonggi-do 16677 (KR)
(74) Representative: HGF
(86) International application number: PCT/KR2022/017933
(87) International publication number: WO 2023/090800

(57) **Abstract**

An electronic device according to various embodiments of the present disclosure may comprise: a first housing; a second housing; a printed circuit board arranged in the space of the first housing or the second housing; a hinge structure arranged between the first housing and the second housing such that the first housing and the second housing are folded or unfolded; and a wireless communication circuit configured to transmit and/or receive wireless signals in a plurality of frequency bands through at least a part of the first housing and at least a part of the second housing. The first housing includes a first metal frame and the first metal frame can be separated into a plurality of parts through a plurality of first segments. The second housing includes a second metal frame and the second metal frame can be separated into a plurality of parts through a plurality of second segments. The electronic device can include a switch for electrically connecting or disconnecting a first part of the first metal frame and a second part of the first metal frame, which are physically separated from each other. In the electronic device, an antenna can be formed from a part of the first metal frame or the antenna can be formed from the part of the first metal frame and a part of the second metal frame. The present invention has the antenna to which the first and second parts of the first metal frame are electrically connected when the switch is turned on, and enables a new radio (NR) signal in a low band to be transmitted/received to/from the antenna.

## Description

### [Technical Field]

Various embodiments of the disclosure relate to an electronic device including an antenna.

### [Background Art]

With the growth of information technology (IT), various types of electronic devices such as a smartphone and a tablet personal computer (PC) are becoming popular. The electronic device can communicate wirelessly with other electronic devices using an antenna module. Additionally, the electronic device may have a transformable structure that is convenient to carry and can utilize a large screen display. For example, an electronic device (e.g., a foldable electronic device) including a large-screen flexible display may have two housings physically connected by at least one hinge structure (e.g., a hinge assembly). Using the hinge structure, the flexible display can be unfolded or folded.

### [Disclosure of Invention]

### [Technical Problem]

The foldable electronic device may include antennas for 4G and 5G communications and antennas for low band communication. In order to increase the data transmission amount of the electronic device, it is necessary to secure additional frequency bands, but the available frequencies per country or operator are limited. The foldable electronic device has been developed to support E-UTRA NR dual connectivity (ENDC) in a low band as well as middle band and high band carrier aggregation (CA)/ENDC. However, it may be difficult to provide an antenna with sufficient electrical length to operate in the low band. For communication between an electronic device (e.g., a wireless communication terminal) and a base station, the performance of a transmitting (Tx) signal compared to a receiving (Rx) signal may be important for an antenna. During the ENDC operation of the antenna, if frequency tuning is performed focusing on the Tx performance, the Rx performance may deteriorate. In the case of other antennas, securing a wider bandwidth is necessary under ENDC operating conditions, but performance may deteriorate compared to CA due to physical limitations.

Various embodiments of the disclosure can provide an electronic device capable of securing an electrical length for a low-low ENDC antenna by extending the electrical length of the antenna from a portion of a metal frame of a first housing of the electronic device to a portion of a metal frame of a second housing.

An electronic device according to various embodiments of the disclosure may include a first housing, a second housing, a printed circuit board disposed in a space of the first housing or the second housing, a hinge structure disposed between the first housing and the second housing to allow the first housing and the second housing to be folded or unfolded, and a wireless communication circuit configured to transmit and/or receive radio signals in a plurality of frequency bands through at least a portion of the first housing and at least a portion of the second housing. The first housing may include a first metal frame that may be divided into a plurality of portions through a plurality of first segmenting portions. The second housing may include a second metal frame that may be divided into a plurality of portions through a plurality of second segmenting portions. The electronic device may further include a switch that electrically connects or isolates physically separated first and second portions of the first metal frame. When the switch is turned on, the electrically connected first and second portions of the first metal frame may form an antenna that transmits and receives a low band new radio (NR) signal. The electronic device may form the antenna by a portion of the first metal frame or by a portion of the first metal frame and a portion of the second metal frame.

An electronic device according to various embodiments of the disclosure may include a first housing, a second housing, a printed circuit board disposed in a space of the first housing or the second housing, a hinge structure disposed between the first housing and the second housing to allow the first housing and the second housing to be folded or unfolded, and a wireless communication circuit configured to transmit and/or receive radio signals in a plurality of frequency bands through at least a portion of the first housing and at least a portion of the second housing. The first housing may include a first metal frame that is divided into a plurality of portions through a plurality of first segmenting portions. The second housing may include a second metal frame that is divided into a plurality of portions through a plurality of second segmenting portions. A first portion of the first metal frame may operate as an antenna. The electronic device may further include a first switch that connects the antenna to a first path so that the antenna matches an impedance suitable for a middle band or a high band, or connects the antenna to a second path so that the antenna matches an impedance suitable for a low band.

The electronic device according to embodiments of the disclosure can secure an electrical length for a low-low ENDC antenna by allowing the electrical length of the antenna to be extended from a portion of a metal frame of the first housing to a portion of a metal frame of the second housing.

The electronic device according to embodiments of the disclosure can connect the antenna to the first path to match the impedance suitable for the middle band (MB) or the high band (HB) and use the antenna as an antenna for LTE carrier aggregation (CA), and also can connect the antenna to the second path to match the impedance suitable for the low band (LB) and use the antenna as a low-low ENDC antenna.

In addition, various effects explicitly or implicitly appreciated through the disclosure may be provided.

### [Brief Description of Drawings]

In connection with the description of the drawings, the same or similar reference numerals may be used for the same or similar components.
FIG. 1 is a block diagram of an electronic device in a network environment according to various embodiments of the disclosure.
FIG. 2 is a diagram illustrating a first state (e.g., unfolded state, open state) of an electronic device according to various embodiments of the disclosure.
FIG. 3 is a diagram illustrating a second state (e.g., folded state, closed state) of an electronic device according to various embodiments of the disclosure.
FIG. 4A is a diagram illustrating a first state (e.g., unfolded state or open state) of an electronic device according to various embodiments of the disclosure.
FIG. 4B is a diagram illustrating a second state (e.g., a folded state or a closed state) of an electronic device according to various embodiments of the disclosure.
FIG. 5Ais a diagram illustrating a structure of antennas (e.g., low-low ENDC antenna) in a first state (e.g., unfolded state or open state) of an electronic device according to various embodiments of the disclosure.
FIG. 5B is a diagram illustrating a structure of antennas (e.g., low-low ENDC antenna) in a second state (e.g., folded state or closed state) of an electronic device according to various embodiments of the disclosure.
FIG. 6 is a diagram illustrating a structure in which a first housing (e.g., main housing structure) metal and a second housing (e.g., sub-housing structure) metal are electrically connected using a hinge structure in an electronic device according to various embodiments of the disclosure.
FIG. 7 a diagram illustrating a structure in which first and second portions of a first housing (e.g., main housing structure) metal are electrically connected using a switch in an electronic device according to various embodiments of the disclosure.
FIG. 8 is a diagram illustrating antenna return loss characteristics of an electronic device according to various embodiments of the disclosure.
FIG. 9 is a diagram illustrating an electric field distribution of a third antenna.
FIG. 10 is a diagram illustrating isolation characteristics of antennas of an electronic device according to various embodiments of the disclosure.
FIG. 11 is a block diagram illustrating a radio frequency (RF) module of an electronic device according to various embodiments of the disclosure.
FIG. 12 is a diagram comparing the performance of antennas of electronic devices according to various embodiments of the disclosure and comparative examples.
FIG. 13 is a diagram illustrating the structure of antennas of an electronic device according to various embodiments of the disclosure.
FIG. 14 is a diagram illustrating antennas being electrically connected or isolated by a first switch and a second switch.
FIG. 15 is a block diagram illustrating a radio frequency (RF) module of an electronic device according to various embodiments of the disclosure.
FIG. 16 is a diagram illustrating characteristics of middle band and high band antennas of an electronic device according to various embodiments of the disclosure.
FIG. 17 is a diagram illustrating characteristics of a low-low ENDC antenna of an electronic device according to various embodiments of the disclosure.

### [Mode for the Invention]

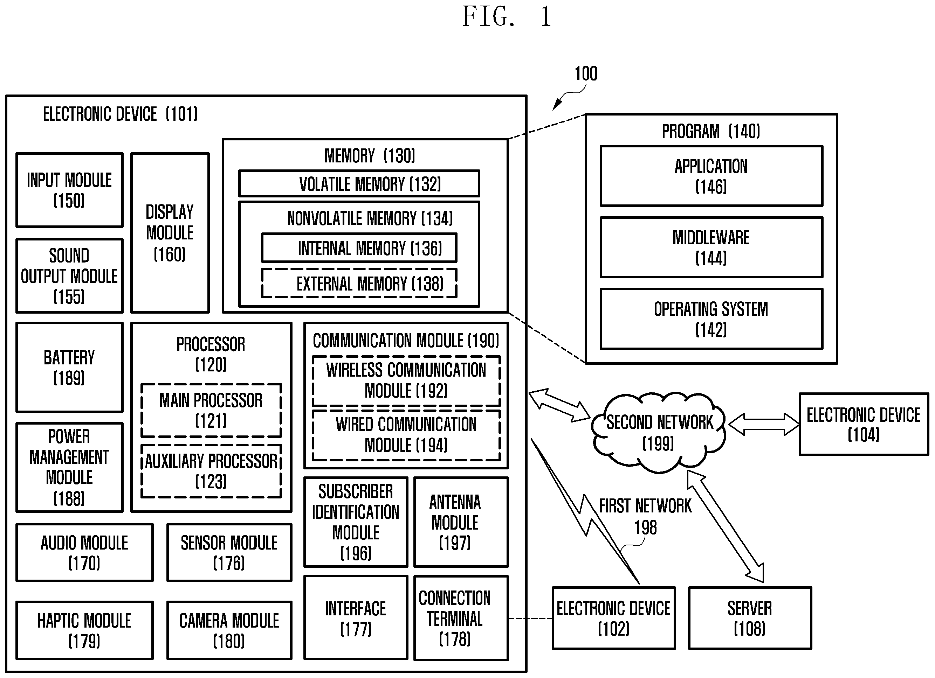

FIG. 1 is a block diagram illustrating an electronic device 101 in a network environment 100 according to various embodiments.

With reference to FIG. 1, the electronic device 101 in the network environment 100 may communicate with an electronic device 102 via a first network 198 (e.g., a short-range wireless communication network), or communicate with an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the above-mentioned components (e.g., the connecting terminal 178) may be omitted from the electronic device 101, or one or more other components may be added in the electronic device 101. In some embodiments, some of the above-mentioned components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, the display module 160 may include a flexible display configured to be folded or unfolded.

According to an embodiment, the display module 160 may include a bar type or plate type display.

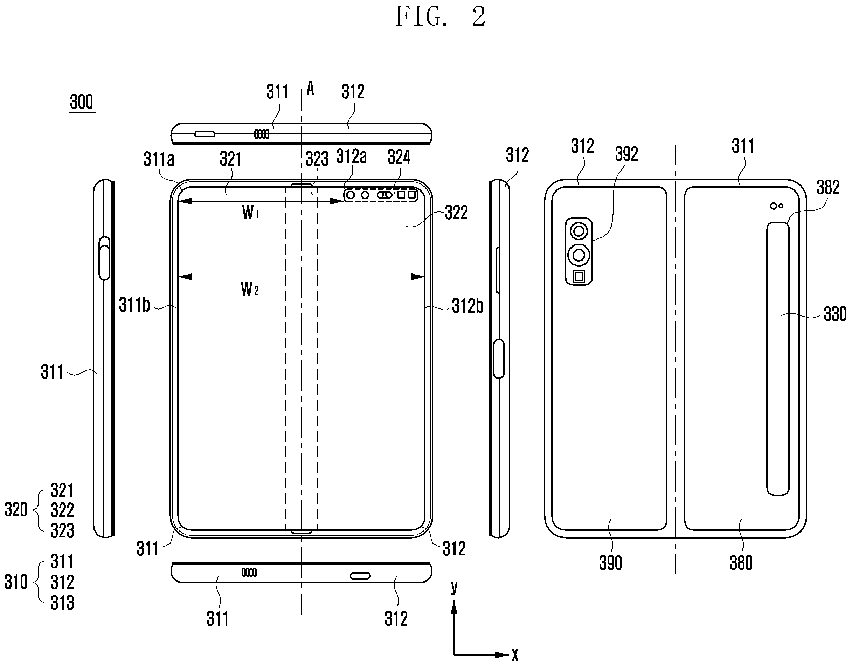

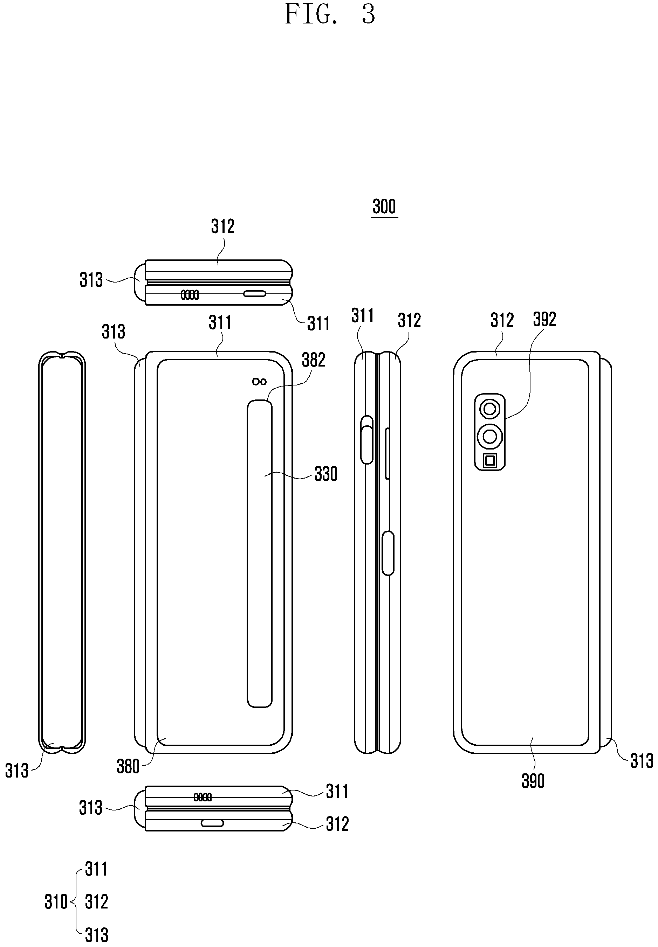

FIG. 2 is a diagram illustrating a first state (e.g., unfolded state, open state) of an electronic device according to various embodiments of the disclosure. FIG. 3 is a diagram illustrating a second state (e.g., folded state, closed state) of an electronic device according to various embodiments of the disclosure.

With reference to FIGS. 2 and 3, an electronic device 300 (e.g., the electronic device 101 in FIG. 1) may include a housing 310 and a display 320 disposed in a space formed by the housing 310. In an embodiment, the display 320 may include a flexible display or a foldable display.

A surface on which the display 320 is disposed may be defined as the first surface or front surface of the electronic device 300 (e.g., the surface on which the screen is displayed when unfolded). In addition, a surface opposite to the front surface may be defined as the second surface or rear surface of the electronic device 300. Additionally, a surface surrounding a space between the front and rear surfaces may be defined as the third surface or lateral surface of the electronic device 300. For example, the electronic device 300 may have its folding area 323 folded or unfolded in a first direction (e.g., x-axis direction) based on a folding axis (e.g., A-axis).

In an embodiment, the housing 310 may include a first housing structure 311, a second housing structure 312 including a sensor area 324, and a hinge structure 313. In addition, the housing 310 may include a first rear cover 380 and a second rear cover 390. The housing 310 of the electronic device 300 is not limited to the shape and combination shown in FIGS. 3A and 3B, and may be implemented with other shapes or combinations of other components. For example, in another embodiment, the first housing structure 311 and the first rear cover 380 may be formed integrally, and the second housing structure 312 and the second rear cover 390 may be formed integrally.

In an embodiment, the first housing structure 311 and the second housing structure 312 may be disposed on both sides about the folding axis A and have an overall symmetrical shape with respect to the folding axis A. The first housing structure 311 and the second housing structure 312 may vary in angle or distance therebetween depending on whether the electronic device 300 is in a first state (e.g., unfolded state), a second state (e.g., folded state), or a third state (e.g., an intermediate state between unfolding and folding).

In an embodiment, the second housing structure 312 may have a shape that is symmetrical to the first housing structure 311. In an embodiment, when an under display camera (UDC) structure is applied, the second housing structure 312 may have a senser area(324)(e.g., UDC area 324)where various sensors (e.g., an illuminance sensor, an iris sensor, and/or an image sensor) are disposed under the display 320.

In an embodiment, at least one sensor (e.g., a camera module, an illuminance sensor, an iris sensor, and/or an image sensor) may be disposed in a bezel area of the display as well as the UDC area 324.

In an embodiment, the first housing structure 311 and the second housing structure 312 may together form a recess that accommodates the display 320. In the illustrated embodiment, because of the sensor area 324, the recess may have two or more different widths in a direction (e.g., x-axis direction) perpendicular to the folding axis A.

For example, the recess may have a first width W1 between a first portion 311a of the first housing structure 311 and a first portion 312a of the second housing structure 312 formed at the edge of the sensor area 324. Also, the recess may have a second width W2 between a second portion 311b of the first housing structure 311 and a second portion 312b of the second housing structure 312. For example, the second portion 311b of the first housing structure 311 may be formed parallel to the folding axis A of the first housing structure 311. The second portion 312b of the second housing structure 312 may not correspond to the sensor area 324 of the second housing structure 312 and may be formed parallel to the folding axis A. In this case, the second width W2 may be formed to be greater than the first width W1. In other words, the first portion 311a of the first housing structure 311 and the first portion 312a of the second housing structure 312, which have mutually asymmetric shapes, may form the first width W1 of the recess. The second portion 311b of the first housing structure 311 and the second portion 312b of the second housing structure 312, which have mutually symmetrical shapes, may form the second width W2 of the recess..

In an embodiment, the first portion 312a and the second portion 312b of the second housing structure 312 may have different distances from the folding axis A. The widths of the recess are not limited to the illustrated example. In various embodiments, the recess may have a plurality of widths by the shape of the sensor area 324 or the asymmetrically shaped portions of the first and second housing structures 311 and 312.

In an embodiment, to support the display 320, at least a part of the first and second housing structures 311 and 312 may be formed of a metallic material or a non-metallic material having a rigidity of a selected size.

In an embodiment, the sensor area 324 may be formed to have a predetermined area adjacent to one corner of the second housing structure 312. However, the arrangement, shape, and size of the sensor area 324 are not limited to the illustrated example. For example, in other embodiments, the sensor area 324 may be provided at another corner of the second housing structure 312 or at any location between the top and bottom corners.

In an embodiment, components for performing various functions of the electronic device 300 may be exposed to the front surface of the electronic device 300 through the sensor area 324 or one or more openings provided in the sensor area 324. In various embodiments, such components may include various types of sensors. These sensors may include, for example, at least one of an illuminance sensor, a front camera (e.g., camera module), a receiver, or a proximity sensor.

The first rear cover 380 is disposed on one side of the folding axis A on the rear surface of the electronic device 300 and may have, for example, a substantially rectangular periphery, which may be surrounded by the first housing structure 311. Similarly, the second rear cover 390 is disposed on the other side of the folding axis A on the rear surface of the electronic device 300, and its periphery may be surrounded by the second housing structure 312.

In the illustrated embodiment, the first rear cover 380 and the second rear cover 390 may have a substantially symmetrical shape about the folding axis A. However, the first and second rear covers 380 and 390 do not necessarily have symmetrical shapes, and in another embodiment, the electronic device 300 may include the first and second rear covers 380 and 390 of various shapes. In still another embodiment, the first rear cover 380 may be formed integrally with the first housing structure 311, and the second rear cover 390 may be formed integrally with the second housing structure 312.

In an embodiment, the first rear cover 380, the second rear cover 390, the first housing structure 311, and the second housing structure 312 may form a space where various components (e.g., a printed circuit board or a battery) of the electronic device 300 can be disposed. In an embodiment, one or more components may be disposed or visually exposed on the rear surface of the electronic device 300. For example, at least a part of a sub-display 330 may be visually exposed through a first rear area 382 of the first rear cover 380. In another embodiment, one or more components or sensors may be visually exposed through a second rear area 392 of the second rear cover 390. In various embodiments, these sensors may include an illuminance sensor, a proximity sensor, and/or a rear camera.

In an embodiment, the hinge structure 313 may include a hinge and a hinge cover. The hinge structure 313 may be disposed between the first housing structure 311 and the second housing structure 312. The hinge cover may be configured to conceal internal components (e.g., hinge structure). The hinge structure 313 may cover a portion where the first housing structure 311 and the second housing structure 312 come into contact with each other when the electronic device 300 is unfolded and folded.

In an embodiment, the hinge structure 313 may be concealed, or exposed to the outside, by a portion of the first and second housing structures 311 and 312 depending on the state (unfolded/flat state or folded state) of the electronic device 300. In an embodiment, when the electronic device 300 is in the unfolded state, the hinge structure 313 may be concealed by a portion of the first and second housing structures 311 and 312, thereby not exposed. In an embodiment, when the electronic device 300 is in the folded state (e.g., fully folded state), the hinge structure 313 may be exposed to the outside between the first and second housing structures 311 and 312. In an embodiment, in an intermediate state where the first and second housing structures 311 and 312 are folded with a certain angle, the hinge cover may be partially exposed to the outside between the first and second housing structures 311 and 312. However, in this case, the exposed area may be less than in the fully folded state. In an embodiment, the hinge cover may have a curved surface.

The display 320 may be disposed in the space formed by the housing 310. For example, the display 320 may be placed in the recess formed by the housing 310 and may form most of the front surface of the electronic device 300.

Therefore, the front surface of the electronic device 300 may include the display 320 and a partial area of the first and second housing structures 311 and 312 adjacent to the display 320. In addition, the rear surface of the electronic device 300 may include the first rear cover 380, a partial area of the first housing structure 311 adjacent to the first rear cover 380, the second rear cover 390, and a partial area of the second housing structure 312 adjacent to the second rear cover 390.

The display 320 may refer to a display in which at least a portion can be transformed into a flat or curved surface. In an embodiment, the display 320 may include a folding area 323, a first area 321 disposed on one side (e.g., the left side in FIG. 3A) with respect to the folding area 323, and a second area 322 disposed on the other side (e.g., the right side in FIG. 3A).

In an embodiment, the display 320 may include an organic light emitting diode (OLED) display of a top emission or bottom emission type. The OLED display may include a low temperature color filter (LTCF) layer, a window glass (e.g., ultra-thin glass (UTG) or a polymer window), and an optical compensation film (OCF). Here, the LTCF layer of the OLED display may be replaced with a polarizing film (or polarizing layer).

The above area division of the display 320 is exemplary, and the display 320 may be divided into a plurality of areas (e.g., more than two) depending on the structure or function. In an embodiment, the area of the display 320 may be divided with respect to the folding area 323 or the folding axis A extending parallel to the y-axis, but in another embodiment, the area of the display 320 may also be divided with respect to any other folding areas (e.g., a folding area parallel to the x-axis) or any other folding axis (e.g., a folding axis parallel to the x-axis).

In an embodiment, the first area 321 and the second area 322 may have an overall symmetrical shape with respect to the folding area 323.

Hereinafter, the operation of the first and second housing structures 311 and 312 depending on the state (e.g., unfolded/flat state and folded state) of the electronic device 300, and each area of the display 320 will be described.

In an embodiment, when the electronic device 300 is in the flat state (e.g., FIG. 3A), the first and second housing structures 311 and 312 may form an angle of about 180 degrees and be arranged to face substantially the same direction. Also, the surfaces of the first and second areas 321 and 322 of the display 320 may form approximately 180 degrees with each other and face substantially the same direction (e.g., the front direction of the electronic device). The folding area 323 may form the same plane as the first and second areas 321 and 322.

In an embodiment, when the electronic device 300 is in the folded state (e.g., FIG. 3B), the first and second housing structures 311 and 312 may be arranged to face each other. Also, the surfaces of the first and second areas 321 and 322 of the display 320 may form a narrow angle (e.g., between 0 degrees and about 10 degrees) and face each other. At least a part of the folding area 323 may be formed as a curved surface with a predetermined curvature.

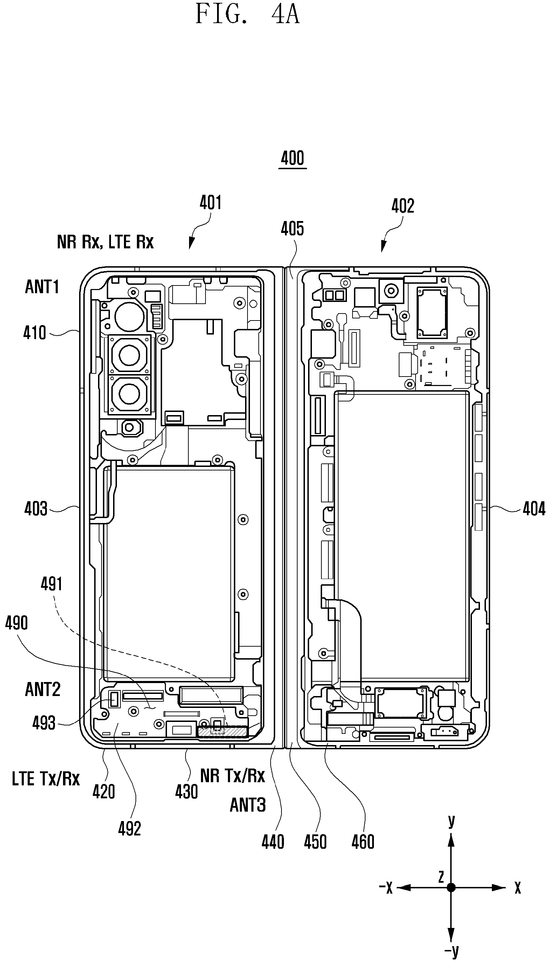

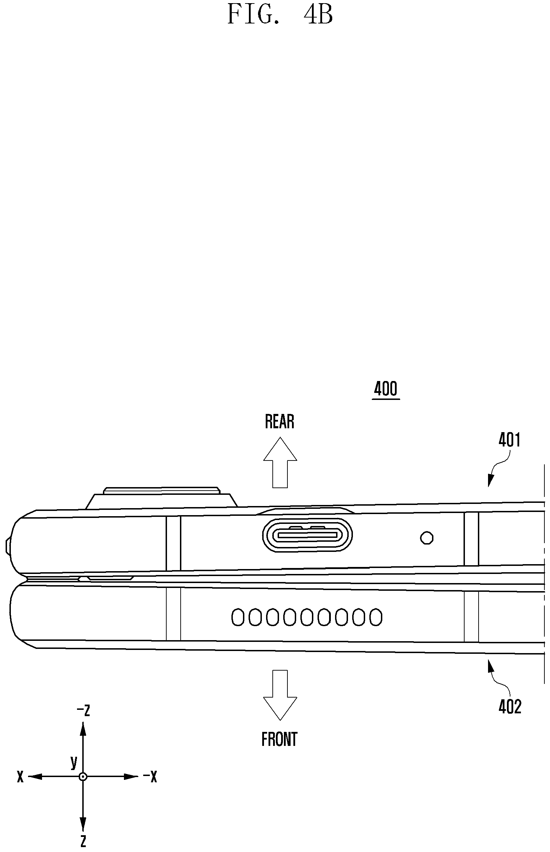

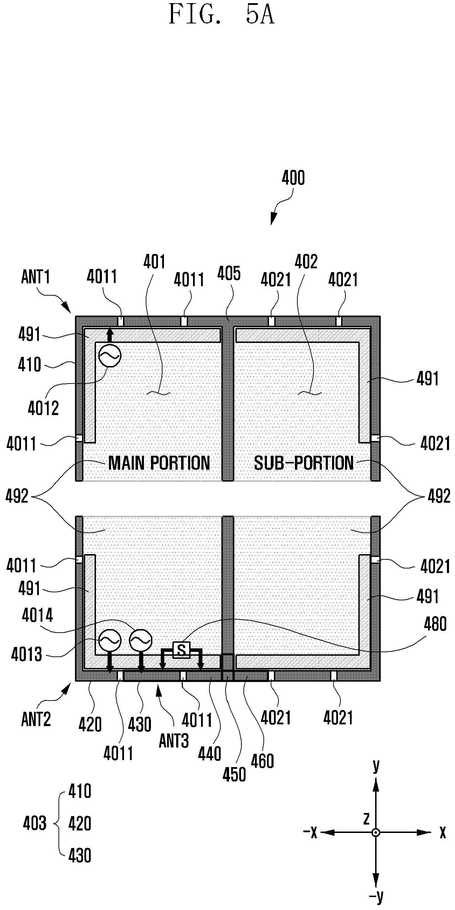

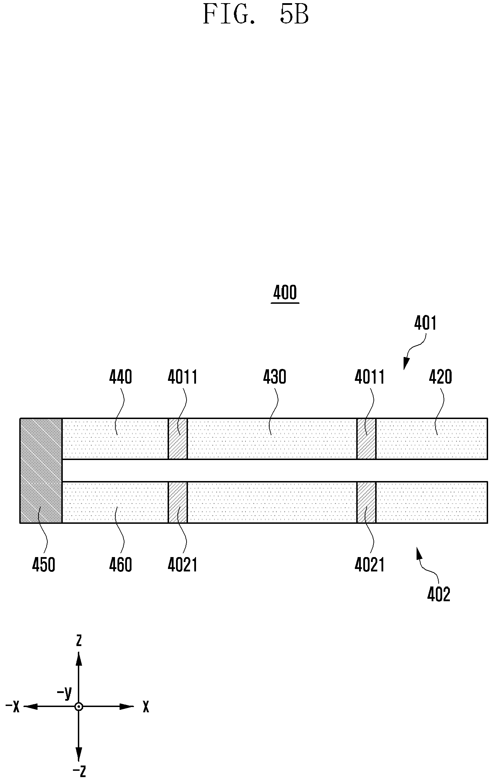

FIG. 4A is a diagram illustrating a first state (e.g., unfolded state or open state) of an electronic device according to various embodiments of the disclosure. FIG. 4B is a diagram illustrating a second state (e.g., a folded state or a closed state) of an electronic device according to various embodiments of the disclosure. FIG. 5A is a diagram illustrating a structure of antennas (e.g., low-low ENDC antenna) in a first state (e.g., unfolded state or open state) of an electronic device according to various embodiments of the disclosure. FIG. 5B is a diagram illustrating a structure of antennas (e.g., low-low ENDC antenna) in a second state (e.g., folded state or closed state) of an electronic device according to various embodiments of the disclosure.

With reference to FIGS. 4A to 5B, an electronic device 400 (e.g., the electronic device 101 in FIG. 1 and the electronic device 300 in FIGS. 3A and 3B) according to various embodiments of the disclosure may be a foldable electronic device (or a flexible electronic device).

In an embodiment, the electronic device 400 may include a first housing structure 401 (e.g., a main housing structure) (e.g., the first housing structure 311 in FIG. 2), a second housing structure 402 (e.g., a sub-housing structure) (e.g., the second housing structure 312 in FIG. 2), and a hinge structure 405 (e.g., a hinge assembly) (e.g., the hinge structure 313 in FIGS. 2 and 3) disposed in a folding area (e.g., the folding area 323 in FIG. 2) between the first and second housing structures 401 and 402.

In an embodiment, the electronic device 400 may be folded or unfolded in the x-axis direction with respect to a folding portion using the hinge structure 405. In one example, when the electronic device 400 is in the second state (e.g., the folded state or the closed state), the first and second housing structures 401 and 402 may be close to or contact each other with respect to the folding portion. In another example, when the electronic device 400 is in the first state (e.g., the unfolded state or the open state), the first and second housing structures 401 and 402 may be unfolded with respect to the folding portion and spaced apart from each other.

In an embodiment, the first housing structure 401 may include a metal frame 403 made of metal. In an example, the metal frame 403 of the first housing structure 401 may be divided into a plurality of portions 410, 420, 430, and 440 by a plurality of first segmenting portions 4011. In an example, at least some of the plurality of portions 410, 420, 430, and 440 of the first housing structure 401 may be used as antennas.

In an embodiment, the first portion 410 of the first housing structure 401 may be used as a first antenna ANT1.

In an embodiment, the second portion 420 of the first housing structure 401 may be used as a second antenna ANT2.

In an embodiment, the third and fourth portions 430 and 440 of the first housing structure 401 may be used as a third antenna ANT3. For example, although the third and fourth portions 430 and 440 of the first housing structure 401 are separated by the first segmenting portion 4011, they may be used as the third antenna ANT3 while being electrically connected by a switch 480.

In an example, the first antenna ANT1 may be located in an upper portion (e.g., in the y-axis direction) of the first housing structure 401. In an example, the second antenna ANT2 may be located in a side portion (e.g., in the negative x-axis direction) and a lower portion (e.g., in the negative y-axis direction) of the first housing structure 401. In an example, the third antenna ANT3 may be located at a lower portion (e.g., in the negative y-axis direction) of the first housing structure 401 and on the right (e.g., in the x-axis direction) of the second antenna ANT2.

In an example, a printed circuit board 490 may be disposed in the internal space of the first housing structure 401, and on the printed circuit board 490, a wireless communication circuit 493, a non-ground area 491, a ground area 492, and a plurality of power feeders (or feeding units) 4012, 4013, and 4014 may be formed. For example, the power feeder 4013 of the second antenna ANT2 and the power feeder 4014 of the third antenna ANT3 may be disposed on the printed circuit board 490, and the power feeder 4012 of the first antenna ANT1 may be disposed on another substrate.

In an embodiment, the power feeders 4012 may be electrically connected to the first antenna ANT1, the second antenna ANT2, and the third antenna ANT3, respectively, using a contact member (e.g., C-clip).

In an example, the first antenna ANT1 may receive a signal of a first protocol (e.g., new radio (NR)) and a signal of a second protocol (e.g., long term evolution (LTE)). In an example, the second antenna ANT2 may transmit and receive a signal of a first frequency band (e.g., LTE). In an example, the third antenna ANT3 may transmit a signal of a first frequency band (e.g., low band NR) and receive a signal of a second frequency band (e.g., low band NR).

In an example, NR and LTE may be distinguished into first and second protocols, respectively, and low-band NR and low-band LTE may be distinguished into first and second frequency bands, respectively.

In an embodiment, the second housing structure 402 may include a metal frame 404 made of metal. In an example, the metal frame 404 of the second housing structure 402 may be divided into a plurality of portions by a plurality of second segmenting portions 4021. At least some of the plurality of portions of the second housing structure 402 may be used as an antenna.

In an embodiment, a first portion 460 of the second housing structure 402 may be used as the third antenna ANT3 while being electrically connected to a hinge housing 450 of the hinge structure 405 and the fourth portion 440 of the first housing structure 401. In an example, the hinge housing 450 of the hinge structure 405 may be disposed between the fourth portion 440 of the first housing structure 401 and the first portion 460 of the second housing structure 402. In an example, the hinge housing 450 may be made of a conductive metal material. In an example, the fourth portion 440 of the first housing structure 401 and the first portion 460 of the second housing structure 402 may be electrically connected by the hinge housing 450 of the hinge structure 405.

In an embodiment, portions other than the first portion 410 to the fourth portion 440 of the first housing structure 401 may be used as an antenna.

In an embodiment, portions other than the first portion 460 of the second housing structure 402 may be used as an antenna.

In an embodiment, at least a portion of the first housing structure 401 or at least a portion of the second housing structure 402 may be used as an antenna for WiFi communication.

In an embodiment, at least a portion of the first housing structure 401 or at least a portion of the second housing structure 402 may be used as an antenna for Bluetooth communication.

In an embodiment, the third antenna ANT3 may include a switch S capable of selectively electrically connecting the third portion 430 and the fourth portion 440. For example, the third antenna ANT3 may transmit and/or receive signals in different frequency bands based on the operation of the switch S. For example, when the switch S electrically isolates the third and fourth portions 430 and 440 from each other, the third antenna ANT3 can transmit and/or receive a signal in a high band or mid band. In another example, when the switch S electrically connects the third and fourth portions 430 and 440 with each other, the third antenna ANT3 can transmit and/or receive a low band signal.

In an embodiment, at least a portion of the plurality of first segmenting portions 4011 and at least a portion of the plurality of second segmenting portions 4021 may be formed at corresponding positions. For example, in the folded state as shown in FIG. 5B, when viewed in the z-axis direction, the plurality of first segmenting portions 4011 and the plurality of second segmenting portions 4021 may overlap.

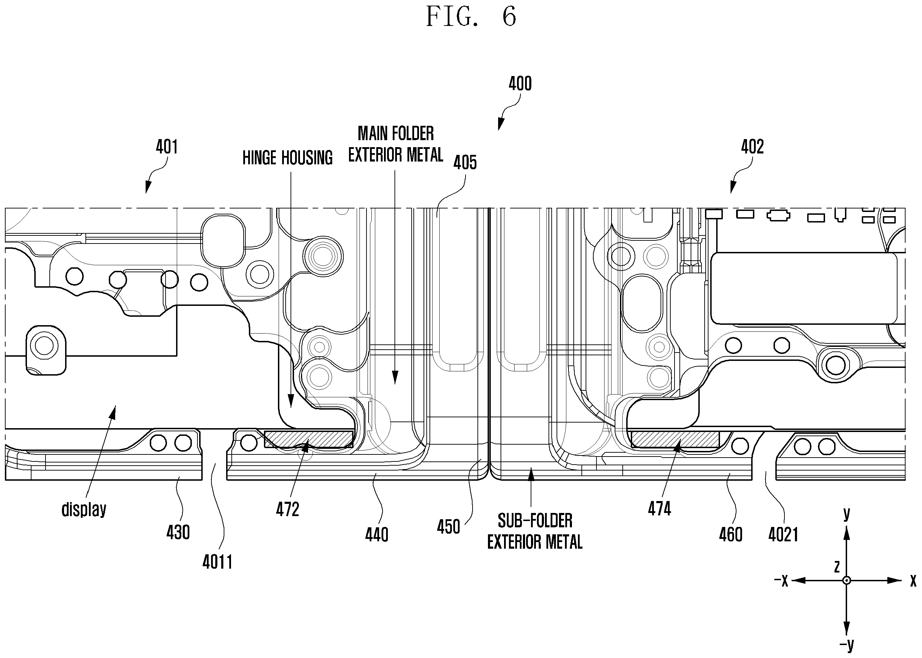

FIG. 6 is a diagram illustrating a structure in which a first housing structure (e.g., the first housing structure 401 in FIG. 4A) (e.g., main housing structure) metal frame (e.g., the metal frame 403 in FIG. 4A) and a second housing structure (e.g., the second housing structure 402 in FIG. 4A) (e.g., sub-housing structure) metal frame (e.g., the metal frame 404 in FIG. 4A) are electrically connected using a hinge structure in an electronic device according to various embodiments of the disclosure. FIG. 6 shows a state in which a plurality of first segmenting portions 4011 are formed between a plurality of portions of the first housing structure 401 and a state in which a plurality of second segmenting portions 4021 are formed between a plurality of portions of the second housing structure 402.

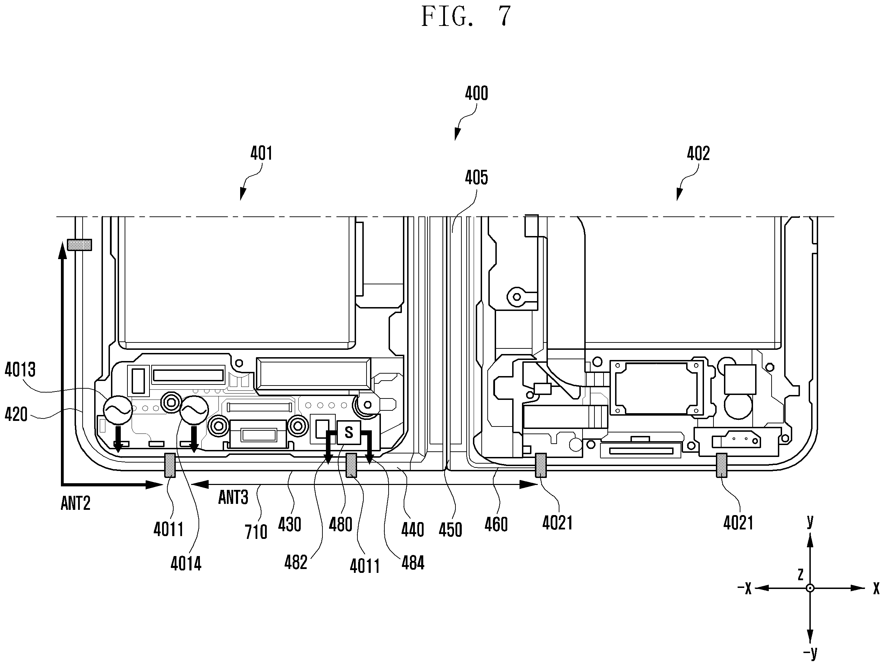

FIG. 7 a diagram illustrating a structure in which third and fourth portions 430 and 440 of a first housing structure (e.g., the first housing structure 401 in FIG. 4A) (e.g., main housing structure) metal frame (e.g., the metal frame 403 in FIG. 4A) are electrically connected using a switch in an electronic device according to various embodiments of the disclosure.

With reference to FIGS. 6 and 7, in an embodiment, a first non-metal area 472 (e.g., a main folder opening space) may be formed between the metal frame and the printed circuit board 490 of the first housing structure 401. For example, the first non-metal area 472 may be adjacent to an upper part (e.g., in the y-axis direction) of the fourth portion 440 of the first housing structure 401, and adjacent to a first side (e.g., in the negative x-axis direction) of a lower part (e.g., in the negative y-axis direction) of the hinge structure 405. For example, when viewed in the z-axis direction, the first non-metal area 472 may be formed so as not to overlap with the ground of the printed circuit board 490 or a metallic component included in the first housing structure 401.

In an embodiment, a second non-metal area 474 (e.g., a sub-folder opening space) may be formed between the metal frame (e.g., the metal frame 404 in FIG. 4A) and the printed circuit board of the second housing structure 402. The second non-metal area 474 may be adjacent to an upper part (e.g., in the y-axis direction) of the first portion 460 of the second housing structure 402, and adjacent to a second side (e.g., in the x-axis direction) of the lower part (e.g., in the negative y-axis direction) of the hinge structure 405. For example, when viewed in the z-axis direction, the second non-metal area 474 may be formed so as not to overlap with the ground of a printed circuit board (not shown) disposed in the second housing structure 402 or a metallic component included in the second housing structure 402.

In an embodiment, the fourth portion 440 of the first housing structure 401 and the first portion 460 of the second housing structure 402 may be electrically connected through the hinge housing 450 of the hinge structure 405.

In an embodiment, the third and fourth portions 430 and 440 of the first housing structure 401 are physically spaced apart from each other, and the segmenting portion 4011 may be disposed in a space between the third and fourth portions 430 and 440. The third and fourth portions 430 and 440 of the first housing structure 401 may be electrically isolated from each other. In an embodiment, the first plurality of segmenting portions 4011 and the plurality of second segmenting portions 4021 may be filled with a non-conductive material.

In an embodiment, the electronic device 400 may include a switch 480 that electrically connects the third and fourth portions 430 and 440 of the first housing structure 401. For example, although the third and fourth portions 430 and 440 of the first housing structure 401 are isolated by the first segmenting portion 4011, they may be used as a third antenna ANT3 by being electrically connected by the switch 480.

For example, in the switch 480, a first terminal 482 may be electrically connected to the third portion 430 of the first housing structure 401, and a second terminal 484 may be electrically connected to the fourth portion 440 of the first housing structure 401.

In an embodiment, the switch 480 may be turned on/off by a control signal input from a processor (e.g., the processor 120 in FIG. 1).

For example, when the switch 480 is turned off, the third and fourth portions 430 and 440 of the first housing structure 401 are electrically isolated from each other, and the third antenna ANT3 can operate only with the third portion 430.

For example, when the switch 480 is turned on, the third and fourth portions 430 and 440 of the first housing structure 401 are electrically connected to each other. Therefore, the third and fourth portions 430 and 440 of the first housing structure 401 and the first portion 460 of the second housing structure 402 can be electrically connected. When the switch 480 is turned on, an electrical length 710 of the third antenna ANT3 can extend throughout the third and fourth portions 430 and 440 of the first housing structure 401 and the first portion 460 of the second housing structure 402, thereby securing the electrical length 710 for a low-low ENDC antenna.

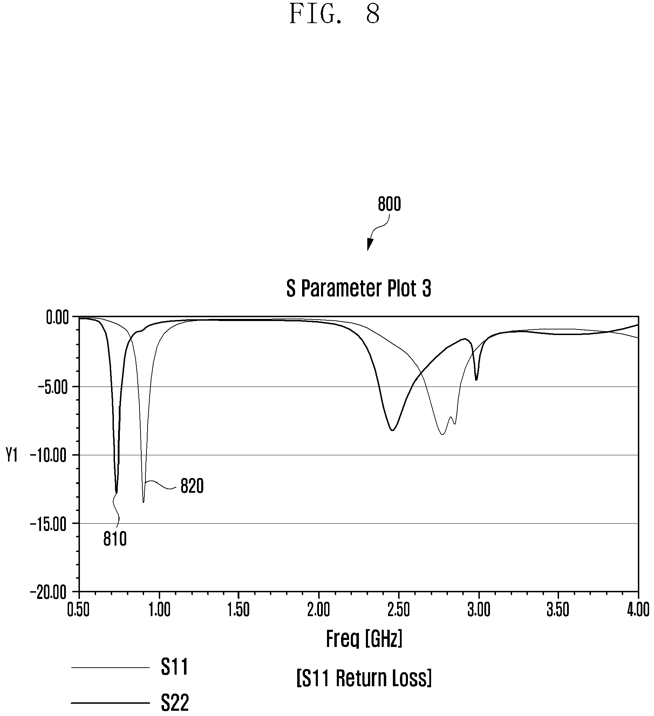

FIG. 8 is a diagram illustrating antenna return loss characteristics of an electronic device according to various embodiments of the disclosure.

With reference to FIGS. 7 and 8, a simulation was conducted to check a return loss of the second antenna ANT2 for LTE Tx and the third antenna ANT3 for low-low ENDC in the electronic device 400 (e.g., the electronic device 400 in FIGS. 4A and 5A) according to various embodiments of the disclosure. From the return loss simulation results, it can be seen that the resonance of the second antenna ANT2 for NR Tx is formed in the LTE B20 band 810. In the case where the switch 480 is turned on, it can be seen that the resonance of the third antenna ANT3 is formed in the N28 band 820.

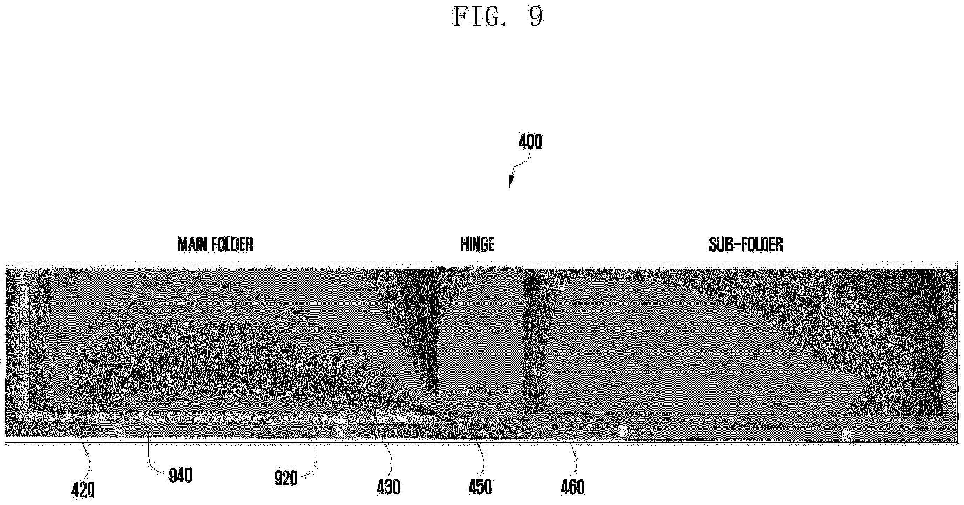

FIG. 9 is a diagram illustrating an electric field distribution of a third antenna.

With reference to FIGS. 7 and 9, the second antenna ANT2 for NR Tx may be fed via a first antenna feed 940, and the third antenna ANT3 for low-low ENDC may be fed via a second antenna feed 920.

In an embodiment, when the switch 480 is turned on, the electrical length (e.g., the electrical length 710 in FIG. 7) of the third antenna ANT3 may extend throughout the third and fourth portions 430 and 440 of the first housing structure 401 and the first portion 460 of the second housing structure 402. Through this, it is possible to secure the electrical length 710 of the antenna (e.g., third antenna) for low-low ENDC. It can be seen that when the electrical length 710 of the antenna (e.g., the third antenna ANT3) extends, the electric field is radiated through the first non-metal area (e.g., the first non-metal area 472 in FIG. 6) and the second non-metal area (e.g., the second non-metal area 474 in FIG. 6) to the metal frame of the first housing structure 401, the hinge housing 450, and the metal frame of the second housing structure 402.

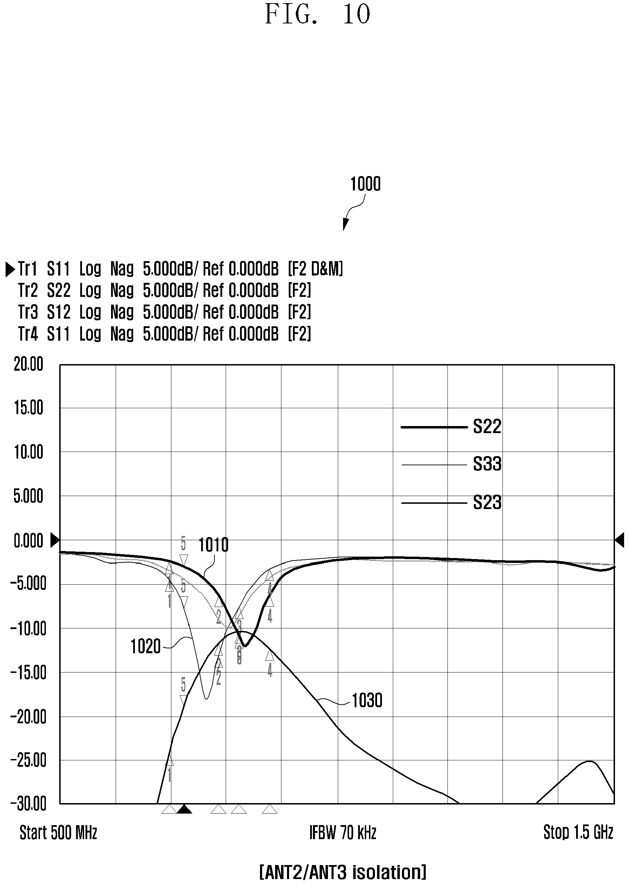

FIG. 10 is a diagram illustrating isolation characteristics of antennas of an electronic device according to various embodiments of the disclosure.

With reference to FIGS. 7 and 10, when the switch 480 is turned on, the electrical length (e.g., the electrical length 710 in FIG. 7) of the antenna (e.g., the third antenna ANT3) for low-low ENDC may extend from the third and fourth portions 430 and 440 of the first housing structure 401 to the first portion 460 of the second housing structure 402. In this case, from the return loss and isolation characteristics of the low-low ENDC antenna (e.g., the third antenna ANT3), it can be seen that the isolation characteristics between the antennas are at a good level of -10dB or less.

In an embodiment, S22 denoted by 1010 represents the S22 return loss characteristic of the second antenna ANT2, and if the S22 characteristic is about -6dB at the resonant frequency, it may mean that 75% of the signal transmitted to the antenna is radiated through air (e.g., -3dB: 50%, -6dB: 75%). S33 denoted by 1020 may mean the reflection coefficient of port #2.

In an embodiment, S23 denoted by 1030 refers to the isolation characteristic between the second antenna ANT2 and the third antenna ANT3, and may mean the amount (e.g., intensity) of the signal passing from the second antenna ANT2 to the third antenna ANT3. If S23 is usually about -10 dB or less, the isolation characteristic between antennas can be judged to be good. Because the return loss and isolation characteristics of the low-low ENDC antenna (e.g., the third antenna ANT3) of the electronic device of the disclosure (e.g., the electronic device 400 in FIGS. 4A, 5A, and 6) are -10dB or less, it can be seen that the isolation characteristic between antennas are good.

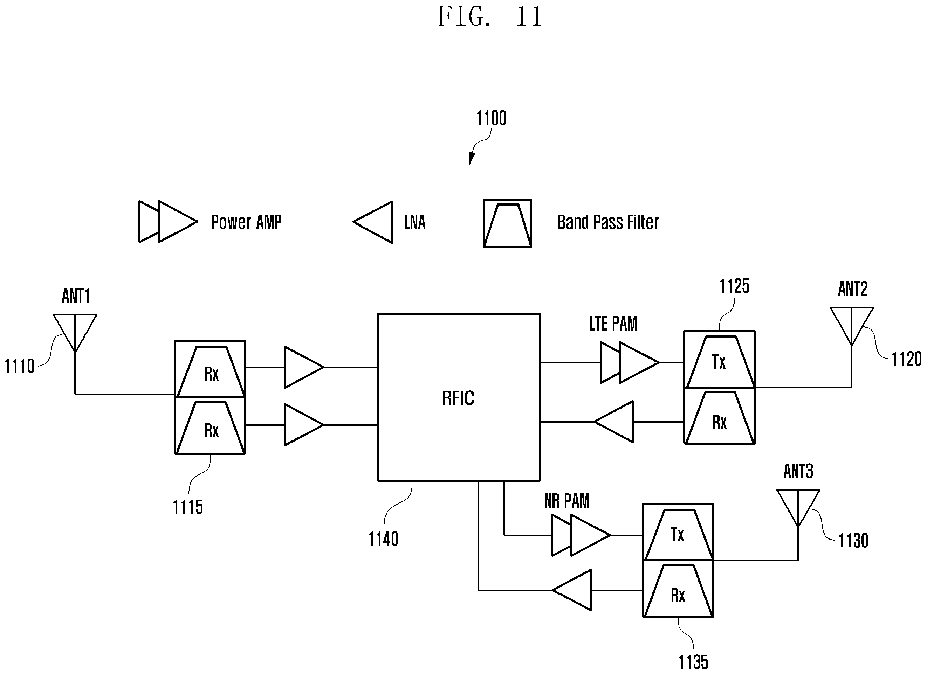

FIG. 11 is a block diagram illustrating a radio frequency (RF) module of an electronic device according to various embodiments of the disclosure.

With reference to FIG. 11, in an embodiment, a first antenna 1110 (ANT1) (e.g., the first antenna ANT1 in FIGS. 4A and 5A) of an electronic device (e.g., the electronic device 400 in FIGS. 4A, 5A, and 6) of the disclosure may be connected to an RFIC 1140 via a first band pass filter 1115 and a low noise amplifier (LNA) of a radio frequency (RF) module 1100 in the reception path. For example, the first antenna 1100 (ANT1) may receive an NR Rx signal and an LTE secondary Rx signal, and the NR Rx signal and the LTE secondary Rx signal may be separated through the first band pass filter 1115 and delivered to the RFIC 1140.

In an embodiment, a second antenna 1120 (ANT2) (e.g., the second antennaANT2 in FIGS. 4A and 5A) may be connected to the RFIC 1140 via a second band pass filter 1125 and a first power amplifier (e.g., LTE power amplifier) of the RF module 1100 in the transmission path. In an embodiment, the second antenna 1120 (ANT2) (e.g., the second antenna ANT2 in FIGS. 4A and 5A) may be connected to the RFIC 1140 via the second band pass filter 1125 and an LNA in the reception path. For example, the second antenna 1120 (ANT2) may transmit an LTE Tx signal and receive an LTE Rx signal. The LTE Tx signal and the LTE Rx signal may be separated through the second band pass filter 1125.

In an embodiment, a third antenna 1130 (ANT3) (e.g., the third antenna ANT3 in FIGS. 4A and 5A) may be connected to the RFIC 1140 via a third band pass filter 1135 and a second power amplifier (e.g., NR power amplifier) in the transmission path. In an embodiment, the third antenna 1130 (ANT3) (e.g., the third antenna ANT3 in FIGS. 4A and 5A) may be connected to the RFIC 1140 via the third band pass filter 1135 and an LNA in the reception path. For example, the third antenna 1130 (ANT2) may transmit a low band NR Tx signal and receive a low band NR Rx signal. The low band NR Tx signal and the low band NR Rx signal may be separated through the third band pass filter 1135.

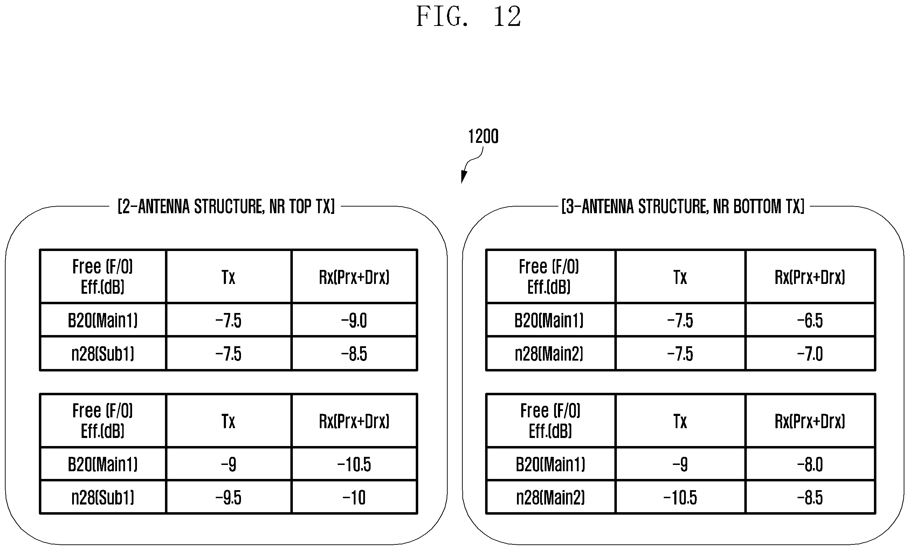

FIG. 12 is a diagram comparing the performance of antennas of electronic devices according to various embodiments of the disclosure and comparative examples.

With reference to FIG. 12, shown is a comparison in performance between the electronic device of the disclosure including three antennas (e.g., the first antenna ANT1, the second antenna ANT2, and the third antenna ANT3 in FIGS. 4A and 5A) and an electronic device of a comparative example having two antennas (the first antenna ANT1 and the second antenna ANT2 in the disclosure). It can be seen that compared to the electronic device of the comparative example having two antennas, the electronic device 400 of the disclosure including the first antenna ANT1, the second antenna ANT2, and the third antenna ANT3 has improved Rx performance in, for example, the B20 band and the n28 band.

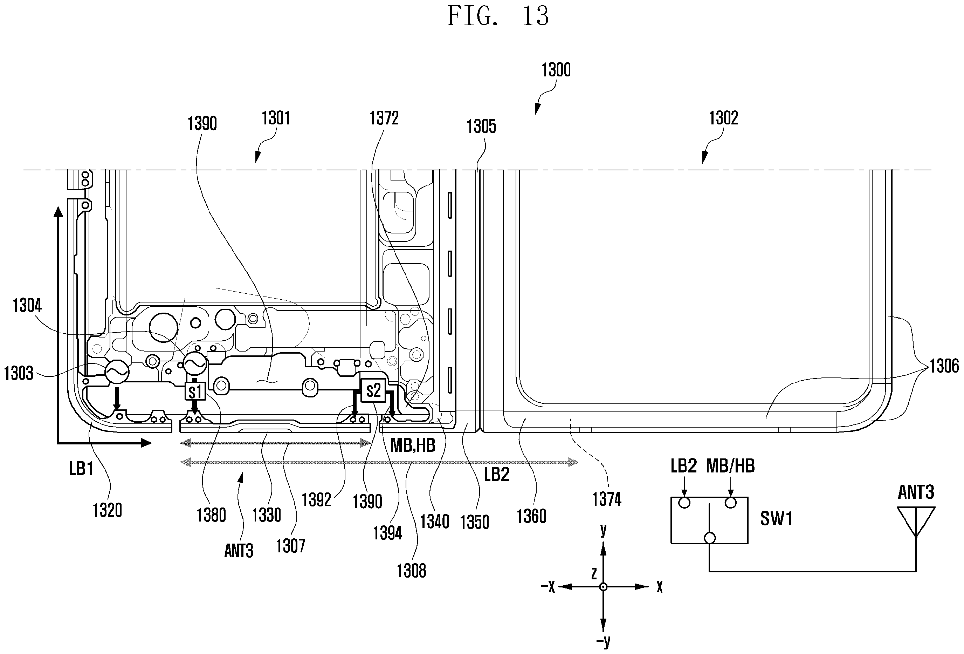

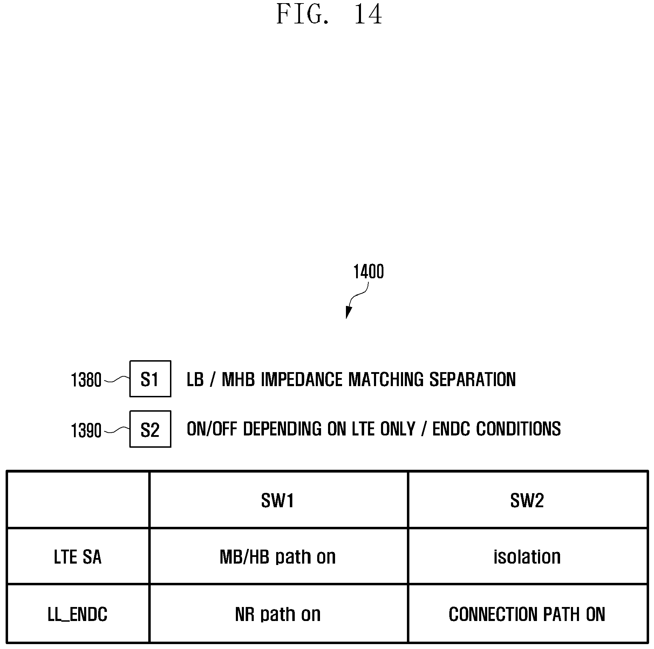

FIG. 13 is a diagram illustrating the structure of antennas of an electronic device according to various embodiments of the disclosure. FIG. 14 is a diagram illustrating antennas being electrically connected or isolated by a first switch and a second switch.

With reference to FIGS. 13 and 14, an electronic device 1300 (e.g., the electronic device 101 in FIG. 1, the electronic device 300 in FIGS. 3A and 3B, the electronic device 400 in FIGS. 4A and 5A) according to various embodiments of the disclosure may be a foldable electronic device (or a flexible electronic device).

In an embodiment, the electronic device 1300 may include a first housing structure 1301 (e.g., a main housing structure) (e.g., the first housing structure 401 in FIGS. 4A and 5A), a second housing structure 1302 (e.g., a sub-housing structure) (e.g., the second housing structure 402 in FIGS. 4A and 5A), and a hinge structure 1305 (e.g., a hinge assembly) (e.g., the hinge structure 313 in FIGS. 3A and 3B) disposed in a folding portion between the first and second housing structures 1301 and 1302.

In an embodiment, the electronic device 1300 may be folded or unfolded in the x-axis direction with respect to the folding portion using the hinge structure 1305. For example, when the electronic device 1300 is in the folded state, the first and second housing structures 1301 and 1302 may be close to or contact each other with respect to the folding portion. In addition, when the electronic device 1300 is in the unfolded state, the first and second housing structures 1301 and 1302 may be unfolded with respect to the folding portion and spaced apart from each other.

In an embodiment, the first housing structure 1301 may include a metal frame made of metal. In an example, the metal frame of the first housing structure 1301 may be divided into a plurality of portions 1320, 1330, and 1340 by a plurality of first segmenting portions (e.g., the plurality of first segmenting portions 4011 in FIGS. 5A and 7), and at least some of the plurality of portions 1320, 1330, and 1340 of the first housing structure 1301 may be used as antennas.

In an embodiment, the second portion 1320 (e.g., the second portion 420 in FIGS. 4A and 5A) of the first housing structure 1301 may be used as a second antenna ANT2.

In an embodiment, the third and fourth portions 1330 and 1340 (e.g., the third and fourth portions 430 and 440 in FIGS. 4A and 5A) of the first housing structure 1301 may be used as a third antenna ANT3.

In an example, the first antenna ANT1 may be located in an upper portion (e.g., in the y-axis direction) of the first housing structure 1301. In an example, the second antenna ANT2 may be located in a side portion (e.g., in the negative x-axis direction) and a lower portion (e.g., in the negative y-axis direction) of the first housing structure 1301. In an example, the third antenna ANT3 may be located at a lower portion (e.g., in the negative y-axis direction) of the first housing structure 1301.

In an example, a printed circuit board 1390 (e.g., the printed circuit board 490 in FIG. 4A) may be disposed in the internal space of the first housing structure 1301, and on the printed circuit board, a wireless communication circuit (e.g., the wireless communication circuit 493 in FIG. 4A), a ground area (e.g., the ground area 492 in FIG. 4A), a non-ground area (e.g., the non-ground area 491 in FIG. 4A), and power feeders (or feeding units) 1303 and 1304 may be formed. The power feeders 1303 may be electrically connected to the first antenna ANT1, the second antenna ANT2, and the third antenna ANT3, respectively, using a contact member (e.g., C-clip).

In an example, the first antenna ANT1 may receive an NR Rx signal and an LTE secondary Rx signal. In an example, the second antenna ANT2 may transmit a first low band (LB 1) LTE Tx signal and receive an LTE Rx signal. In an example, the third antenna ANT3 may transmit a second low band (LB2) NR Tx signal and receive a low band NR Rx signal.

In an embodiment, the second housing structure 1302 (e.g., the second housing structure 402 in FIGS. 4A and 5A) may include a metal frame made of metal. In an example, the metal frame of the second housing structure 1302 may be divided into a plurality of portions by a plurality of second segmenting portions (e.g., the plurality of second segmenting portions 4021 in FIGS. 5A and 7), and at least some of the plurality of portions 1306 of the second housing structure 1302 may be used as an antenna.

In an embodiment, a first portion 1360 of the second housing structure 1302 may be used as the third antenna ANT3 while being electrically connected to a hinge housing 1350 of the hinge structure 1305 and the fourth portion 1340 of the first housing structure 1301. In an example, the hinge housing 1350 of the hinge structure 1305 may be disposed between the fourth portion 1340 of the first housing structure 1301 and the first portion 1360 of the second housing structure 1302. In an example, the hinge housing 1350 may be made of a conductive metal material. In an example, the fourth portion 1340 of the first housing structure 1301 and the first portion 1360 of the second housing structure 1302 may be electrically connected by the hinge housing 1350 of the hinge structure 1305.

In an embodiment, portions other than the first portion 1310 to the fourth portion 1340 of the first housing structure 1301 may be used as an antenna.

In an embodiment, portions other than the first portion 1360 of the second housing structure 1302 may be used as an antenna.

In an embodiment, at least a portion of the first housing structure 1301 or at least a portion of the second housing structure 1302 may be used as an antenna for WiFi communication.

In an embodiment, at least a portion of the first housing structure 1301 or at least a portion of the second housing structure 1302 may be used as an antenna for Bluetooth communication.

In an embodiment, a first non-metal area (e.g., the first non-metal area 472 in FIG. 6) (e.g., a main folder opening space) may be formed between the metal frame (e.g., the metal frame 403 in FIG. 4A) and the printed circuit board (e.g., the printed circuit board 490 in FIG. 4A) of the first housing structure 1301. For example, the first non-metal area 1372 (e.g., the first non-metal area 472 in FIG. 6) may be adjacent to an upper part (e.g., in the y-axis direction) of the fourth portion 1340 of the first housing structure 1301, and adjacent to a first side (e.g., in the negative x-axis direction) of a lower part (e.g., in the negative y-axis direction) of the hinge structure 1305. For example, when viewed in the negative z-axis direction, the first non-metal area 1372 may be formed so as not to overlap with the ground of the printed circuit board 490 or a metallic component included in the first housing structure 1301.

In an embodiment, a second non-metal area (e.g., the second non-metal area 472 in FIG. 6) (e.g., a sub-folder opening space) may be formed between the metal frame (e.g., the metal frame 404 in FIG. 4A) and the printed circuit board 490 of the second housing structure 1302. For example, the second non-metal area 1374 (e.g., the second non-metal area 472 in FIG. 6) may be adjacent to an upper part (e.g., in the y-axis direction) of the first portion 1360 of the second housing structure 1302, and adjacent to a second side (e.g., in the x-axis direction) of the lower part (e.g., in the negative y-axis direction) of the hinge structure 1305. For example, when viewed in the negative z-axis direction, the second non-metal area 1374 may be formed so as not to overlap with the ground of a printed circuit board 490 or a metallic component included in the second housing structure 1302.

In an embodiment, the electronic device 1300 according to various embodiments of the disclosure may include a first switch 1380 that changes the path of the third antenna ANT3.

For example, when the third antenna ANT3 is used as an antenna for the middle band (MB) or the high band (HB), the first switch 1380 may connect the third antenna ANT3 to a first path so that an impedance suitable for the middle band (MB) or high band (HB) is matched. The first switch 1380 may connect the third antenna ANT3 to the first path by a control signal input from a processor (e.g., the processor 120 in FIG. 1). At this time, a second switch 1390 may be turned off.

In an example, when the first switch 1380 connects the third antenna ANT3 to the first path and the second switch 1390 is turned off, the third antenna ANT3 may be used as an antenna for LTE carrier aggregation (CA).

For example, when the third antenna ANT3 is used for the low band (LB), the first switch 1380 may connect the third antenna ANT3 to a second path so that an impedance suitable for the low band (LB) is matched. The first switch 1380 may connect the third antenna ANT3 to the second path by a control signal input from the processor (e.g., the processor 120 in FIG. 1). At this time, the second switch 1390 may be turned on.

In an example, when the first switch 1380 connects the third antenna ANT3 to the second path and the second switch 1390 is turned on, the third antenna ANT3 may be used as a low-low ENDC antenna.

In an embodiment, the fourth portion 1340 of the first housing structure 1301 and the first portion 1360 of the second housing structure 1302 may be electrically connected through the hinge housing 1350 of the hinge structure 1305.

In an embodiment, the third and fourth portions 1330 and 1340 of the first housing structure 1301 are physically spaced apart from each other, and a segmenting portion (e.g., the segmenting portion 4011 in FIG. 7) that may be filled with a non-conductive material may be disposed in a space between the third and fourth portions 1330 and 1340. Thus, the third and fourth portions 1330 and 1340 of the first housing structure 1301 may be electrically isolated from each other.

In an embodiment, the electronic device 1300 may include the second switch 1390 that electrically connects the third and fourth portions 1330 and 1340 of the first housing structure 1301.

For example, in the second switch 1390, a first terminal 1392 may be electrically connected to the third portion 1330 of the first housing structure 1301, and a second terminal 1394 may be electrically connected to the fourth portion 1340 of the first housing structure 1301.

In an embodiment, the second switch 1390 may be turned on/off by a control signal input from the processor (e.g., the processor 120 in FIG. 1).

For example, when the second switch 1390 is turned off, the third antenna ANT3 may be used as the middle band (MB) or high band (HB) antenna. When the second switch 1390 is turned off, the third and fourth portions 1330 and 1340 of the first housing structure 1301 are electrically isolated, and only the third portion 1330 forms an electrical length 1307 for the operation of the third antenna ANT3.

In an example, when the second switch 1390 is turned on, the third antenna ANT3 may be used for the low-low ENDC. When the second switch 1390 is turned on, the third and fourth portions 1330 and 1340 of the first housing structure 1301 may be electrically connected. Accordingly, the third and fourth portions 1330 and 1340 of the first housing structure 1301 and the first portion 1360 of the second housing structure 1302 may be electrically connected. When the second switch 1390 is turned on, an electrical length 1308 of the third antenna ANT3 is extended from the third portion 1330 of the first housing structure 1301 to the fourth portion 1340 of the first housing structure 1301 and the first portion 1360 of the second housing structure 1302, thereby securing the electrical length for the low-low ENDC antenna.

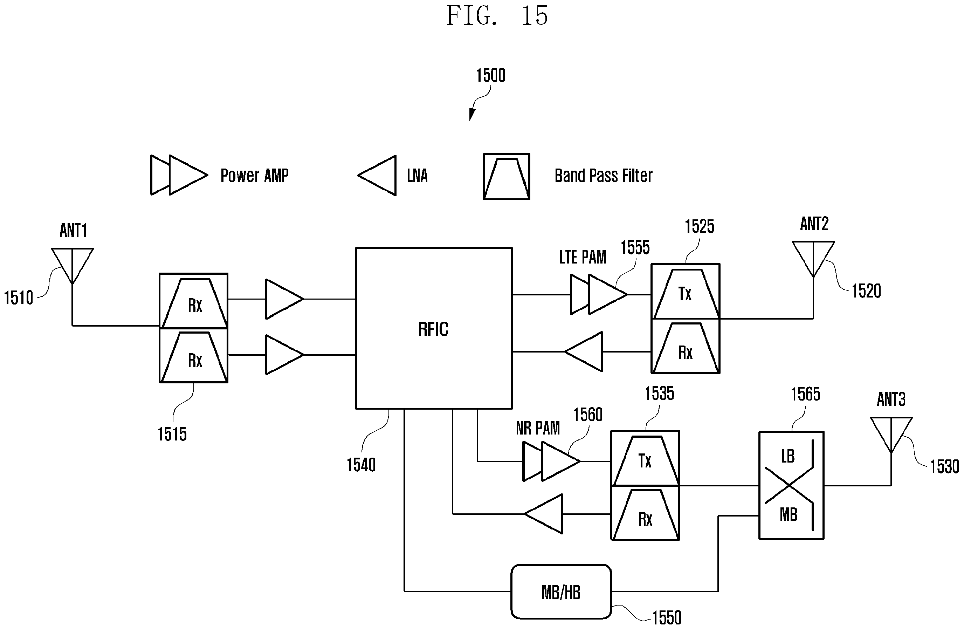

FIG. 15 is a block diagram illustrating a radio frequency (RF) module 1500 of an electronic device according to various embodiments of the disclosure.

With reference to FIGS. 13 and 15, in an embodiment, a first antenna 1510 (ANT1) (e.g., the first antenna ANT1 in FIGS. 4A and 5A) of an electronic device 1300 (e.g., the electronic device 400 in FIGS. 4A, 5A, and 6) of the disclosure may be connected to an RFIC 1540 via a first band pass filter 1515 and a low noise amplifier (LNA) of the radio frequency (RF) module 1500 in the reception path. For example, the first antenna 1510 (ANT1) may receive an NR Rx signal and an LTE secondary Rx signal, and the NR Rx signal and the LTE secondary Rx signal may be separated through the first band pass filter 1515 and delivered to the RFIC 1540.

In an embodiment, a second antenna 1520 (ANT2) (e.g., the second antenna ANT2 in FIGS. 4A and 5A) may be connected to the RFIC 1540 via a second band pass filter 1525 and a first power amplifier (e.g., LTE power amplifier) in the transmission path. In an embodiment, the second antenna 1520 (ANT2) (e.g., the second antenna ANT2 in FIGS. 4A and 5A) may be connected to the RFIC 1540 via the second band pass filter 1525 and an LNA in the reception path. For example, the second antenna 1520 (ANT2) may transmit an LTE Tx signal and receive an LTE Rx signal. The LTE Tx signal and the LTE Rx signal may be separated through the second band pass filter 1525.

In an embodiment, a third antenna 1530 (ANT3) (e.g., the third antenna ANT3 in FIGS. 4A and 5A) may be connected to the RFIC 1540 via a diplexer 1565, a third band pass filter 1535 and a second power amplifier 1560 (e.g., NR power amplifier) in the transmission path. In an embodiment, the third antenna 1530 (ANT3) (e.g., the third antenna ANT3 in FIGS. 4A and 5A) may be connected to the RFIC 1540 via a duplexer 1550, the diplexer 1565, the third band pass filter 1535, and an LNA in the reception path. For example, the duplexer 1550 may combine the Tx and Rx signals of the middle band (MB) or high band (HB) with the NR signals of the low band (LB).

In an example, the third antenna ANT3 may be used as an antenna for the middle band (MB) or high band (HB) or as an antenna for low-low ENDC, depending on the switching of the first switch 1380.

In an example, when the first switch 1380 connects the third antenna ANT3 to the first path, the third antenna ANT3 may be used as an antenna for the middle band (MB) or high band (HB). At this time, the second switch (e.g., the second switch 1390 in FIG. 13) may be turned off.

In an example, when the first switch 1380 connects the third antenna ANT3 to the second path, the third antenna ANT3 may be used for low-low ENDC. At this time, the second switch (e.g., the second switch 1390 in FIG. 13) may be turned on.

The electronic device 1300 according to various embodiments of the disclosure may radiate signals of the low band (LB), middle band (MB), or high band (HB) through the third antenna ANT3.

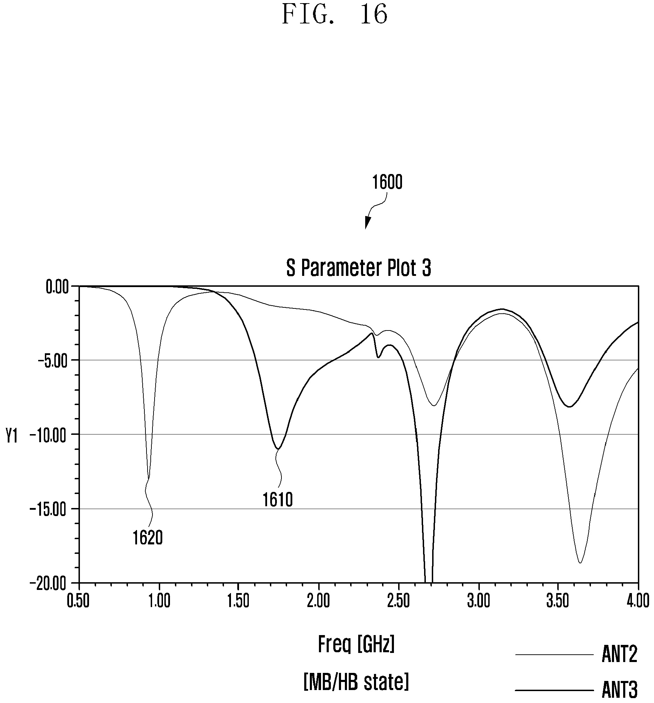

FIG. 16 is a diagram illustrating characteristics of middle band and high band antennas of an electronic device according to various embodiments of the disclosure.

With reference to FIGS. 13, 14 and 16, in an embodiment, when the third antenna ANT3 is used as a middle band (MB) or high band (HB) antenna, it can be seen that broadband performance is secured from about 1.5 GHz band to about 3 GHz band as shown in a performance graph 1610 of the third antenna ANT3. Also, it can be seen that broadband performance is secured from about 1 GHz band to about 3.5 GHz band as shown in a performance graph 1620 of the second antenna ANT2.

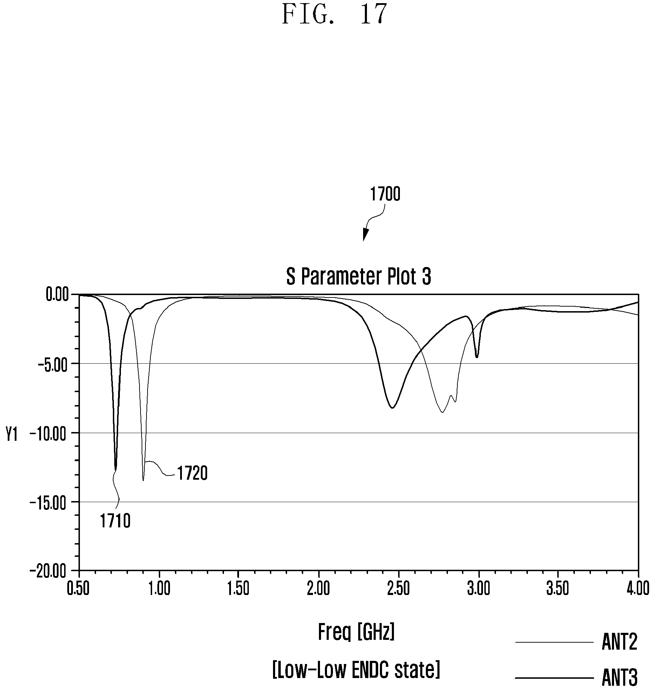

FIG. 17 is a diagram illustrating characteristics of a low-low ENDC antenna of an electronic device according to various embodiments of the disclosure.

With reference to FIG. 17, in an embodiment, when the third antenna ANT3 is used as a Low-Low ENDC antenna of the low band (LB), it can be seen that a low band (LB) resonance of the 700 MHz band is formed as shown in a performance graph 1710 of the third antenna ANT3. Also, it can be seen that a low band (LB) resonance of the 900 MHz band is formed as shown in a performance graph 1720 of the second antenna ANT2.

An electronic device (e.g., the electronic device 101 in FIG. 1, the electronic device 300 in FIGS. 3A and 3B, the electronic device 400 in FIGS. 4A, 5A, 6 and 7) according to various embodiments of the disclosure may include a first housing structure (e.g., the first housing structure 401 in FIGS. 6 and 7), a second housing structure (e.g., the second housing structure 402 in FIGS. 6 and 7), a printed circuit board disposed in a space of the first housing structure 401 or the second housing structure 402, a hinge structure 313 or 405 disposed between the first housing structure 401 and the second housing structure 402 to allow the first housing structure 401 and the second housing structure 402 to be folded or unfolded, and a wireless communication circuit (e.g., the communication module 190 in FIG. 1) configured to transmit and/or receive radio signals in a plurality of frequency bands through at least a portion of the first housing structure 401 and at least a portion of the second housing structure 402. The first housing structure 401 may include a first metal frame that is divided into a plurality of portions through a plurality of first segmenting portions (e.g., the plurality of first segmenting portions 4011 in FIG. 7). The second housing structure 402 may include a second metal frame that is divided into a plurality of portions through a plurality of second segmenting portions (e.g., the plurality of second segmenting portions 4021 in FIG. 7). The electronic device 101, 300 or 400 may further include a switch 480 that electrically connects or isolates physically separated first and second portions (e.g., the third and fourth portions 430 and 440 in FIG. 7) of the first metal frame. The electronic device 101, 300 or 400 may form an antenna by a portion of the first metal frame or by a portion of the first metal frame and a portion of the second metal frame. When the switch is turned on, the electrically connected first and second portions of the first metal frame may form the antenna that transmits and receives a low band new radio (NR) signal.

According to an embodiment, the second portion (e.g., the fourth portion 440 in FIG. 7) of the first metal frame and a first portion (e.g., the first portion 460 in FIG. 7) of the second metal frame may be electrically connected by at least a portion of the hinge structure.

According to an embodiment, the switch 480 may be turned on or off by control of a processor disposed on the printed circuit board.

According to an embodiment, an electrical length of the antenna may be adjusted by turning the switch 480 on or off.

According to an embodiment, when the switch 480 is turned on, the first portion (e.g., the third portion 430 in FIG. 7) of the first metal frame, the second portion (e.g., the fourth portion 440 in FIG. 7) of the first metal frame, the hinge structure 313 or 405, and a first portion (e.g., the first portion 460 in FIG. 7) of the second metal frame may be electrically connected to operate as the antenna.

According to an embodiment, when the switch 480 is turned off, only the first portion (e.g., the third portion 430 in FIG. 7) of the first metal frame may operate as the antenna.

According to an embodiment, the first portion (e.g., the third portion 430 in FIG. 7) of the first metal frame and a first portion (e.g., the first portion 460 in FIG. 7) of the second metal frame may be electrically connected by a hinge housing (e.g., the hinge housing 450 in FIG. 7) of the hinge structure 313 or 405.

According to an embodiment, another antenna may be formed by a portion of the first housing structure 401 other than the first and second portions of the first metal frame so as to receive a new radio (NR) signal and receive a long term evolution (LTE) secondary signal.

According to an embodiment, another antenna may be formed by a portion of the first housing structure 401 other than the first and second portions of the first metal frame so as to transmit a long term evolution (LTE) signal and receive the LTE signal.

An electronic device (e.g., the electronic device 101 in FIG. 1, the electronic device 300 in FIGS. 3A and 3B, the electronic device 1300 in FIG. 13) according to various embodiments of the disclosure may include a first housing structure (e.g., the first housing structure 1301 in FIG. 13), a second housing structure (e.g., the second housing structure 1302 in FIG. 13), a printed circuit board disposed in a space of the first housing structure 1301 or the second housing structure 1302, a hinge structure (e.g., the hinge structure 313 in FIG. 3A) disposed between the first housing structure 1301 and the second housing structure 1302 to allow the first housing structure 1301 and the second housing structure 1302 to be folded or unfolded, and a wireless communication circuit (e.g., the communication module 190 in FIG. 1) configured to transmit and/or receive radio signals in a plurality of frequency bands through at least a portion of the first housing structure 1301 and at least a portion of the second housing structure 1302. The first housing structure 1301 may include a first metal frame that is divided into a plurality of portions through a plurality of first segmenting portions (e.g., the plurality of first segmenting portions 4011 in FIG. 7). The second housing structure 1302 may include a second metal frame that is divided into a plurality of portions through a plurality of second segmenting portions (e.g., the plurality of second segmenting portions 4021 in FIG. 7). A first portion (e.g., the third portion 1330 in FIG. 13) of the first metal frame may operate as an antenna. The electronic device 101, 300 or 1300 may further include a first switch (e.g., the first switch 1380 in FIG. 13) that connects the antenna to a first path so that the antenna matches an impedance suitable for a middle band or a high band, or connects the antenna to a second path so that the antenna matches an impedance suitable for a low band.

According to an embodiment, the electronic device 101, 300 or 1300 may further include a second switch (e.g., the second switch 1390 in FIG. 13) that electrically connects or isolates the first portion (e.g., the third portion 1330 in FIG. 13) of the first metal frame and a second portion (e.g., the fourth portion 1340 in FIG. 13) of the first metal frame which are physically separated. The antenna may be formed by a portion of the first metal frame or by a portion of the first metal frame and a portion of the second metal frame.

According to an embodiment, the second portion (e.g., the fourth portion 1340 in FIG. 13) of the first metal frame and a first portion (e.g., the first portion 1360 in FIG. 13) of the second metal frame may be electrically connected by at least a portion of the hinge structure 313 or 1305.

According to an embodiment, the second switch (e.g., the second switch 1390 in FIG. 13) may be turned on or off by control of a processor disposed on the printed circuit board. An electrical length of the antenna may be adjusted by turning the second switch (e.g., the second switch 1390 in FIG. 13) on or off.

According to an embodiment, the first switch (e.g., the first switch 1380 in FIG. 13) may connect the antenna to the first path. When the second switch (e.g., the second switch 1390 in FIG. 13) is turned off, only the first portion (e.g., the third portion 1330 in FIG. 13) of the first metal frame may operate as the antenna.

According to an embodiment, the antenna may be used for LTE carrier aggregation (CA).

According to an embodiment, the first switch (e.g., the first switch 1380 in FIG. 13) may connect the antenna to the second path. When the second switch (e.g., the second switch 1390 in FIG. 13) is turned on, the first portion (e.g., the third portion 1330 in FIG. 13) of the first metal frame, the second portion (e.g., the fourth portion 1340 in FIG. 13) of the first metal frame, the hinge structure 313 or 1305, and the first portion (e.g., the first portion 1360 in FIG. 13) of the second metal frame may be electrically connected to operate as the antenna.

According to an embodiment, the antenna may be used for low-low ENDC.

According to an embodiment, another antenna may be formed by a portion of the first housing structure 1301 other than the first portion of the first metal frame so as to receive a new radio (NR) signal and receive a long term evolution (LTE) secondary signal.

According to an embodiment, another antenna may be formed by a portion of the first housing structure 1301 other than the first portion of the first metal frame so as to transmit a long term evolution (LTE) signal and receive the LTE signal.

## Claims

1. An electronic device comprising:
a first housing structure;
a second housing structure;
a printed circuit board disposed in a space of the first housing structure or the second housing structure;
a hinge structure disposed between the first housing structure and the second housing structure to allow the first housing structure and the second housing structure to be folded or unfolded; and
a wireless communication circuit configured to transmit and/or receive radio signals in a plurality of frequency bands through at least a portion of the first housing structure and at least a portion of the second housing structure,
wherein the first housing structure includes a first metal frame that is divided into a plurality of portions through a plurality of first segmenting portions,
wherein the second housing structure includes a second metal frame that is divided into a plurality of portions through a plurality of second segmenting portions,
wherein the electronic device further comprises a switch that electrically connects or isolates physically separated first and second portions of the first metal frame, and
wherein when the switch is turned on, the electrically connected first and second portions of the first metal frame form an antenna that transmits and receives a low band new radio (NR) signal.

2. The electronic device of claim 1, wherein the antenna is formed by a portion of the first metal frame or by a portion of the first metal frame and a portion of the second metal frame.

3. The electronic device of claim 2, wherein the second portion of the first metal frame and a first portion of the second metal frame are electrically connected by at least a portion of the hinge structure.

4. The electronic device of claim 1, wherein the switch is turned on or off by control of a processor disposed on the printed circuit board.

5. The electronic device of claim 4, wherein an electrical length of the antenna is adjusted by turning the switch on or off.

6. The electronic device of claim 5, wherein when the switch is turned on, the first portion of the first metal frame, the second portion of the first metal frame, the hinge structure, and a first portion of the second metal frame are electrically connected to operate as the antenna.

7. The electronic device of claim 5, wherein when the switch is turned off, only the first portion of the first metal frame operates as the antenna.

8. The electronic device of claim 1, wherein the first portion of the first metal frame and a first portion of the second metal frame are electrically connected by a hinge housing of the hinge structure.

9. The electronic device of claim 1, wherein another antenna is formed by a portion of the first housing structure other than the first and second portions of the first metal frame so as to receive a new radio (NR) signal and receive a long term evolution (LTE) secondary signal.

10. The electronic device of claim 1, wherein another antenna is formed by a portion of the first housing structure other than the first and second portions of the first metal frame so as to transmit a long term evolution (LTE) signal and receive the LTE signal.
